# EUROPEAN PATENT APPLICATION

(11) **EP 4 579 932 A1**
(43) Date of publication of application: **02.07.2025**
(21) Application number: 23868664.6
(22) Date of filing: 22.09.2023
(51) Int. Cl.: H01M 50/533, H01M 50/59, H01M 50/586, H01M 50/178, H01M 50/105, H01M 50/211, H01M 50/249

(54) **DISCONNECTION PREVENTIVE BATTERY MODULE**

(30) Priority: 23.09.2022 KR 20220120659
(71) Applicant: LG Energy Solution, Ltd., Seoul 07335 (KR)
(72) Inventor: LEE, Hee Su, Daejeon 34122 (KR); OH, Jaehun, Daejeon 34122 (KR); AN, Hyuk, Daejeon 34122 (KR); PARK, Won Kyoung, Daejeon 34122 (KR); JEE, Seungok, Daejeon 34122 (KR)
(74) Representative: Plasseraud IP
(86) International application number: PCT/KR2023/014554
(87) International publication number: WO 2024/063612

(57) **Abstract**

The present invention provides: a structure of a pouch type battery cell provided with electrode leads protruding from lengthwise ends thereof, respectively, wherein the pouch type battery cell includes a margin capable of extending the electrode leads by being deformed as end portions of the electrode leads are tensioned; and a structure of a battery module with a battery cell laminate accommodated therein formed by stacking at least one of above-described battery cells.

## Description

### [TECHNICAL FIELD]

This application claims the benefit of priority based on Korean Patent Application No. 10-2022-0120659, dated September 23, 2022, entire content disclosed in the document of the patent applications is included as a part of this specification.

The present invention relates to a battery module that prevents disconnection or damage of electrode leads. In particular, the present invention relates to a battery module, manufactured by stacking a plurality of pouch type battery cells, wherein disconnection or damage of electrode leads due to swelling may be prevented, and welding strength with a busbar is ensured.

### [BACKGROUND ART]

Secondary batteries, which are easy to apply depending on the product group and have electrical characteristics such as high energy density, are widely applied not only to portable devices, but also to electric vehicles or hybrid vehicles driven by an electrical driving source, and power storage devices. These secondary batteries are attracting attention as a new energy source for improving eco-friendliness and energy efficiency, not only because they have the primary advantage of being able to dramatically reduce the use of fossil fuels, but also because they do not generate any by-products due to energy use.

While small mobile devices use one or two or three battery cells per device, medium to large devices such as vehicles require high output and large capacity. Therefore, a medium-to-large battery module in which multiple battery cells are electrically connected is used.

Since it is desirable for medium to large-sized battery modules to be manufactured as small and light as possible, rectangular batteries and pouch-type batteries that may be stacked with high integration and have a small weight-to-capacity battery are mainly used as battery cells for medium-to-large battery modules.

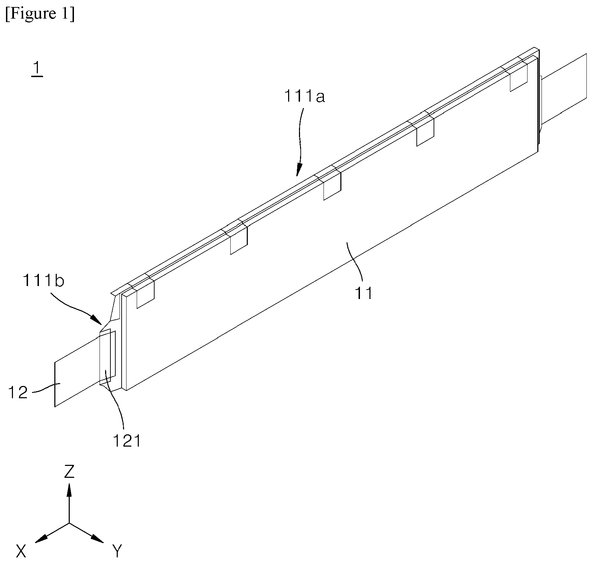

FIG. 1 is a perspective view illustrating a pouch type battery cell. Referring to FIG. 1, a battery cell 1 may include: an electrode assembly (not shown); a pouch 11 folded in half and fusion-sealed to accommodate the electrode assembly and provided with a first sealing part 111a at two lengthwise side surfaces in a direction X and a second sealing part 111b provided at one widthwise side surface in a direction Z; and a pair of electrode leads 12 extending from the electrode assembly in the direction X and protruding outward from the pouch 11. The electrode leads 12 may be fused to the pouch 11 through a lead film 121 provided in a region corresponding to the first sealing part 111a. A plurality of battery cells 1 as described above may be stacked to form a high-capacity and/or high-voltage battery module.

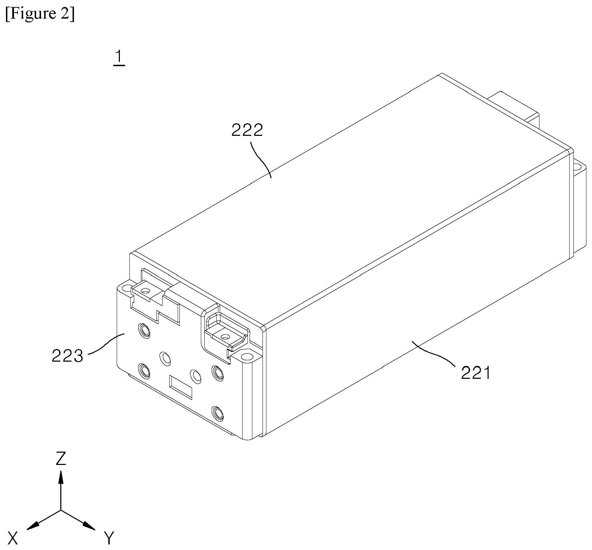

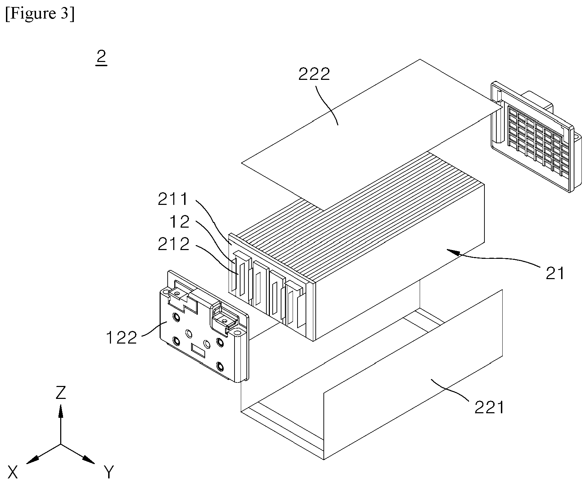

FIGS. 2 and 3 are a perspective view and an exploded perspective view illustrating a battery module, respectively. Referring to FIGS. 2 and 3, a battery module 2 may include: a battery cell laminate 21 formed by stacking a plurality of battery cells 1; a busbar frame 211 provided at two lengthwise sides of the battery cell laminate 21; and a housing 22 accommodating the battery cell laminate 21 and the busbar frame 211. The housing 22 may include: a U frame 221 with an open top, and open front and rear ends, a top plate 222 covering the open top of the U frame 221; and a pair of end plates 223 covering the open front and rear ends of the U frame 221, respectively. The electrode leads 12 may be connected to each other in series or in parallel in by being welded to the busbar 213 provided at the busbar frame 211.

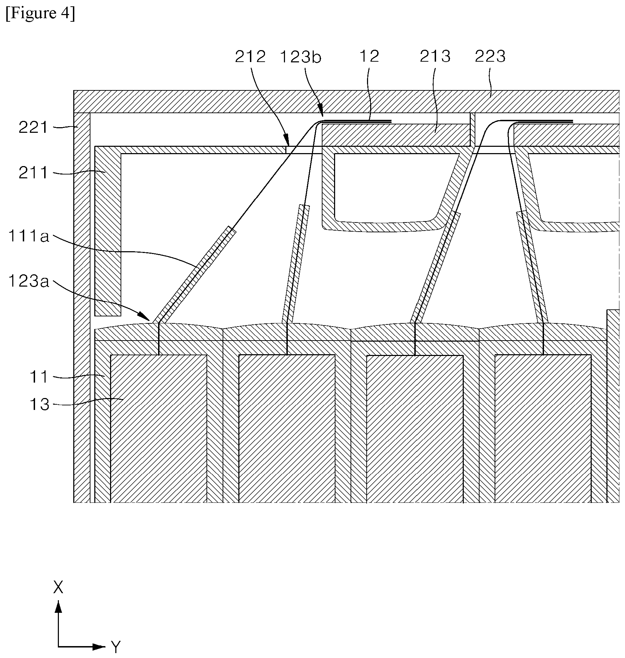

FIG. 4 is an enlarged cross-sectional view illustrating electrode leads welded to busbars in a battery module. Referring to FIG. 4, a slit 212 through which the electrode leads 12 penetrate may be provided at the busbar frame 211. The electrode leads 12 may extend from the electrode assembly 13, protrude outward from the pouch 11, penetrate the slit 212, and are welded to the busbar 213 provided on a lengthwise outer surface of the busbar frame 211. Here, the electrode leads 12 are bent at a first bent part 123a adjacent to the first sealing part 111a side and at a second bent part 123b adjacent to the busbar 213 such that the end portion thereof is contact with the busbar 213.

Meanwhile, it is widely known that so-called swelling, a phenomenon in which gas generated inside the pouch 11 inflates the pouch 11, may occur in the battery cell 1. When swelling occurs, the battery cells 1 expand and push each other in the stacking direction Y, and due to such displacement of the battery cell 1, the welding of the electrode lead 12 and the busbar 213 may be dismantled, causing a disconnection, or a part of the electrode lead 12 may be damaged. In particular, the first bent part 123a is more vulnerable to damage since the degree of bending exceeds the designed level as the battery cell 1 is pushed outward. Therefore, a structure of the battery cell and battery module wherein disconnection between the electrode lead 12 and the busbar 213 does not occur is necessary despite the displacement of the battery cell 1 as described above.

Still referring to FIG. 4, in the process of bending of the electrode lead 12 at each of the first bent part 123a and the second bent part 123b, spring back phenomenon wherein the electrode lead 12 is not completely plastically deformed and is elastically restored to a certain angle may occur. Here, the degree of bending of the electrode lead 12 at each of the first bent part 123a and the second bent part 123b is a very important factor in the spring back phenomenon. This is because the greater the degree to which the electrode lead 12 is bent at each of the first bent part 123a and the second bent part 123b, the greater the rate of plastic deformation, thereby reducing the spring back phenomenon. Since the spring back phenomenon affects the welding strength between the electrode lead 12 and the busbar 213 and the strength of the electrode lead 12 itself, the degree of spring back must be predictable and suitably adjustable in order for such strength to be designed.

### [DISCLOSURE]

### [TECHNICAL PROBLEM]

In order to solve above-described problem of prior art, it is an object of the present invention to provide a battery cell and a structure of battery module that prevents disconnection between electrode leads and busbars or damage to electrode leads despite displacement of the battery cell due to swelling.

It is another object of the present invention to provide a battery cell and a structure of battery module with designable strength of the electrode lead and welding strength between the electrode lead and the busbar by the degree of spring back adjustable during the bending process for welding the electrode lead to the busbar.

The technical problems to be solved by the present invention are not limited to the objects described above, and other objects and advantages of the present invention that are not described may be understood through the following description and will be more clearly understood by the examples of the present invention. Additionally, it is apparent that the objects and advantages of the present invention may be embodied by the means and combinations thereof indicated in the claims.

### [TECHNICAL SOLUTION]

In order to solve the above-described problem, the present invention provides a structure of a pouch type battery cell provided with electrode leads protruding from lengthwise ends thereof, respectively, wherein the pouch type battery cell includes a margin capable of extending the electrode leads by being deformed as end portions of the electrode leads are tensioned.

Predetermined sections at two sides of the margin may be disposed on substantially same virtual plane. That is, there may be one virtual plane that simultaneously passes through the predetermined sections at the two sides of the margin

Each of the predetermined section may include a section of 1mm or more at each side of the margin.

The margin may be of an arch shape having an arc-shaped longitudinal cross-section with a constant radius of curvature. For example, the margin may be of an arch shape having a semicircular longitudinal cross-section with a constant radius of curvature.

The margin may be manufactured by plastically deforming each of the electrode leads by a die having a shape corresponding to the margin. Alternatively, the margin may be manufactured by bending the electrode leads.

The present invention also provides a structure of a battery module with a battery cell laminate accommodated therein formed by stacking at least one of above-described battery cells.

The battery cell laminate may include a section where the length of the electrode lead increases toward the outer side in the thicknesswise direction of the battery cell laminate. That is, for some section along the thicknesswise direction of the battery cell laminate, the length of the electrode lead of the battery cell relatively closer to the outer side in the thicknesswise direction may be longer than that of the electrode lead of the battery cell relatively closer to the inner side in the thicknesswise direction.

Alternatively, the battery cell laminate may include a section where the number of the margins provided at the electrode lead of the battery cell increases toward the outer side of the battery cell laminate in the thicknesswise direction. That is, along the thicknesswise direction of the battery cell laminate, the number of the margins provided at a section of the electrode lead of the battery cell relatively closer to the outer side in the thicknesswise direction may be greater than that of the margin provided at a section of the electrode lead of the battery cell relatively closer to the inner side in the thicknesswise direction.

The battery cell laminate may be manufactured to be symmetric about the center of two thicknesswise sides thereof. That is, the battery cell laminate may be manufactured to be symmetric about a plane passing through the center thereof with the thicknesswise direction as the normal direction.

The present invention may also provide a battery pack including the battery module, and a vehicle including the battery pack. Since the structures of these battery packs and vehicles are already known, additional descriptions will not be given herein.

### [ADVANTTAGEOUS EFFECTS]

The present invention may provide structures of battery cell and battery module that prevent disconnection or damage of electrode leads when swelling occurs by providing a margin capable of deformation as displacement occurs in the battery cell to extend the electrode lead.

The present invention may also provide structures of battery cell and battery module wherein the degree of spring back may be designed by having a shape that may be bent similar to a flat type despite the electrode lead with a margin.

An advantage of the present invention lies in that structures of battery cell and battery module, which may be manufactured using the same manufacturing process and manufacturing equipment as in the case without the margin despite the electrode lead with a margin, may be provided.

In addition, the present invention may have various other effects, and the descriptions thereof will be given in each embodiment, or the description of the effects that may be easily inferred by a person skilled in the art will be omitted.

### [BRIEF DESCRIPTION OF DRAWINGS]

FIG. 1 is a perspective view illustrating a pouch type battery cell.
FIGS. 2 and 3 are a perspective view and an exploded perspective view illustrating a battery module, respectively.
FIG. 4 is an enlarged cross-sectional view illustrating electrode leads welded to busbars in a battery module.
FIG. 5 is a perspective view illustrating a battery cell according to an embodiment of the present invention.
FIGS. 6 and 7 are cross-sectional views illustrating battery cells according to embodiments of the present invention, respectively.
FIGS. 8 and 9 are schematic diagrams illustrating manufacturing processes of battery cells according to embodiments of the present invention, respectively.
FIG. 10 is an enlarged cross-sectional view illustrating electrode leads welded to busbars in a battery module according to an embodiment of the present invention.
FIG. 11 is an enlarged cross-sectional view illustrating swelling in a battery module according to an embodiment of the present invention.
FIGS. 12 and 13 are perspective views showing a battery pack including battery modules according to the present invention and a vehicle including the same, respectively.

### [DESCRIPTION OF REFERENCE NUMERALS]

1: battery cell
11: pouch
   111: sealing part
   111a: first sealing part
   111b: second sealing part
12: electrode lead
   121: lead film
   122: margin
      122P: virtual plane
      R: radius of curvature
   123: bent part
      123a: first bent part
      123b: second bent part
13: electrode assembly
2: battery module
21: battery cell laminate
   211: busbar frame
   212: slit
   213: busbar
22: housing
   221: U frame
   222: top plate
   223: end plate
P: battery pack
V: vehicle
X: lengthwise direction/front-and-rear direction
Y: thicknesswise direction/left-and-right direction/stacking direction
Z: widthwise direction/up-and-down direction/heightwise direction

### [DETAILED DESCRIPTION OF THE INVENTION]

The above-described objects, features and advantages will be described in detail hereinafter with reference to the accompanying drawings such that those skilled in the art will be able to implement the technical idea of the present invention. In describing the present invention, when it is determined that a detailed description of prior art related to the present invention unnecessarily obscures the gist of the present invention, the detailed description thereof will be omitted. Hereinafter, preferred embodiments according to the present invention will be described in detail with reference to the accompanying drawings. In the drawings, identical reference numerals are used for indicating identical or similar components.

While "first", "second", etc. are used to describe various elements, these elements are of course not limited by these terms. These terms are only used to distinguish one element from another, and unless specifically stated otherwise, a first element may also be a second element.

Throughout the specification, unless stated otherwise, each element may be singular or plural.

Hereinafter, "arranging an element at upper portion (or lower portion) of an element" or "arranging an element at top (or bottom) of an element" refers to not only "arranging an element to be in contact with upper surface (or lower surface)" but also to "arranging an element above upper surface (or lower surface) with another element interposed therebetween."

Additionally, when an element is described as being "connected to," "coupled with," or "in contact with" another element, it should be understood that the element may be "directly connected to," "directly coupled with," or "directly in contact with" another element, or the element may be "connected to," "coupled with," or "in contact with" another element with yet another element interposed therebetween or via yet another element.

The expressions in singular form used herein include expressions in plural form unless the context explicitly dictates otherwise. Terms such as "consists of" or "comprises" used herein should not be construed as necessarily including all of the elements or steps described in the specification, and should be construed as not including some of the elements or steps, or including additional elements or steps.

In addition, the expressions in singular form used herein include expressions in plural form unless the context explicitly dictates otherwise. Terms such as "consists of" or "comprises" used herein should not be construed as necessarily including all of the elements or steps described in the specification, and should be construed as not including some of the elements or steps, or including additional elements or steps.

Throughout the specification, "A and/or B" refers to A, B or A and B unless specifically stated otherwise, and "C to D" refers to from equal to or higher than C to equal to or lower D unless specifically stated otherwise.

The present invention provides a structure of a pouch type battery cell provided with electrode leads protruding from lengthwise ends thereof, respectively, the pouch type battery cell including a margin capable of extending the electrode leads by being deformed as end portions of the electrode leads are tensioned. Hereinafter, a preferred embodiment of a battery cell according to the present invention will be described with reference to the accompanying drawings.

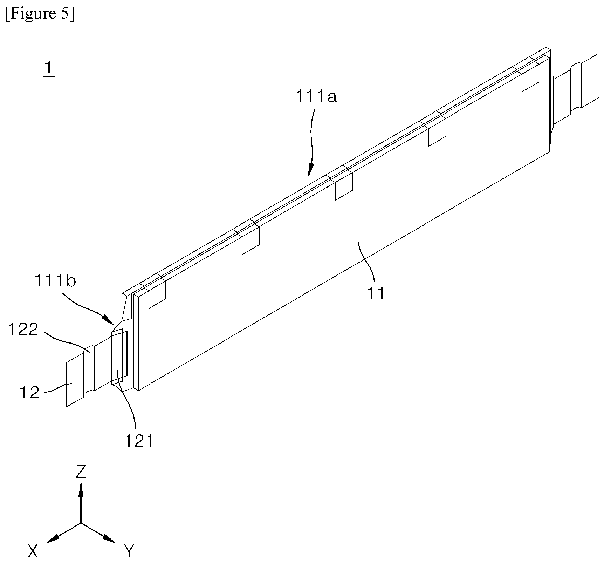

FIGS. 5, 6 and 7 are perspective and cross-sectional views, respectively, illustrating a battery cell according to an embodiment of the present invention. Referring to FIGS. 5, 6 and 7, a battery cell 1 may include an electrode assembly 13, a pouch 11 and an electrode lead.

The electrode assembly 13 may be formed by alternately stacking anodes and cathodes with a separator interposed therebetween.

The pouch 11 may be formed of metal foil.

The inner surface and/or outer surface of the pouch 11 may be coated with a synthetic resin layer for insulation.

The pouch 11 accommodates the electrode assembly 13 and may be folded in half and sealed at two lengthwise side surfaces in the direction X and the second sealing part 111b provided at the one widthwise side surface in the direction Z. The sealing may be achieved by fusion of a synthetic resin layer coated on the inner surface of the pouch 11. In particular, the second sealing part 111b may be fusion-sealed and then re-sealed through folding and/or tape attachment.

The electrode lead 12 may be made of a flat metal foil having a length and width.

A plurality of electrode leads 12 may be provided. Preferably, the electrode leads 12 may be provided in pairs.

The electrode lead 12 may extend from the electrode assembly 13. Specifically, the electrode lead 12 may extend from the anode or cathode of the electrode assembly 13. Alternatively, the electrode lead 12 may be electrically connected to the anode or cathode by being connected to an electrode tab extending from the anode or cathode. Here, the electrode tabs may extend from a plurality of anodes or cathodes, respectively, and be connected to the electrode lead 12 while being stacked.

The electrode lead 12 may extend from the electrode assembly 13 and protrude from the pouch 11. For example, the electrode lead 12 may protrude from the pouch 11 through the first sealing part 111a. Here, a lead film made of synthetic resin may be provided in the area where the electrode lead 12 overlaps with the first sealing part 111a such that the electrode lead 12 may be fused with a portion of the pouch 11 located at two thicknesswise sides of the first sealing part 111a.

A margin 122 may be provided at the electrode lead 12. The margin 122 may be provided at a portion of the electrode lead 12 that protrudes outward from the pouch 11.

The margin 122 may be a section between a start point and an end point of the cross-section of the electrode lead 12 that is not straight. That is, the margin 122 may be a section on the electrode lead 12 that does not follow the direction in which the electrode lead 12 extends. Accordingly, since the start point and the end point of the margin 122 are not connected by the shortest distance, the shape of the electrode lead 12 is deformed to approach a straight line as the two ends of the electrode lead 12 are tensioned such that the margin 122 may be stretched overall along the extending direction thereof.

**Predetermined** sections at two sides of the margin 122, respectively, i.e., two sections having predetermined length extending from a start point and an end point of the margin 122 along the extending direction of the electrode lead 12, may be manufactured to be on the same virtual plane 122P. That is, the predetermined sections may lie on a single straight line on a cross-sectional view of the electrode lead 12. In other words, before and after the margin 122, at least the portions of the electrode lead 12 may extend in the same direction, and the straight line connecting the start point and the end point of the margin 122 may follow the extending direction of the electrode lead 12.

The predetermined sections may be selected in various ways depending on the physical properties of the electrode lead 12 and the design of the battery module 2, which will be described later. For example, each of the predetermined sections may be a section having a length of 1 mm or more at each side of the margin 122. Alternatively, each of the predetermined section may be shorter.

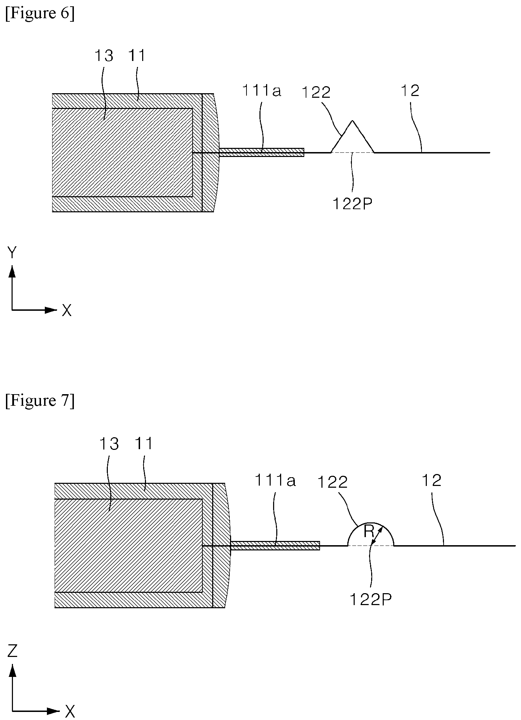

The margin 122 may have various shapes. For example, the margin 122 may have a plurality of acute angle points or obtuse angle points as shown in FIG. 6. Alternatively, the margin 122 may be of an arch shape having an arc-shaped longitudinal cross-section with a predetermined radius of curvature R as shown in FIG. 7. **In** particular, the margin 122 may be of an arch shape having a semicircular longitudinal cross-section with a predetermined radius of curvature R.

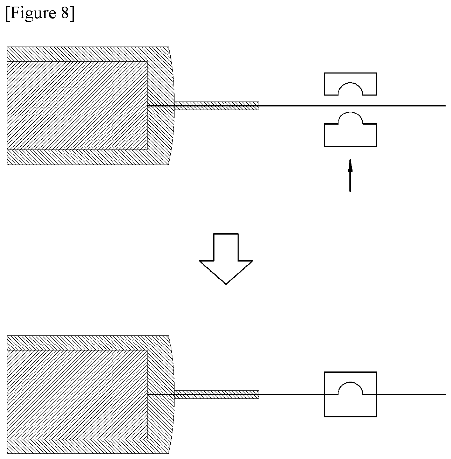

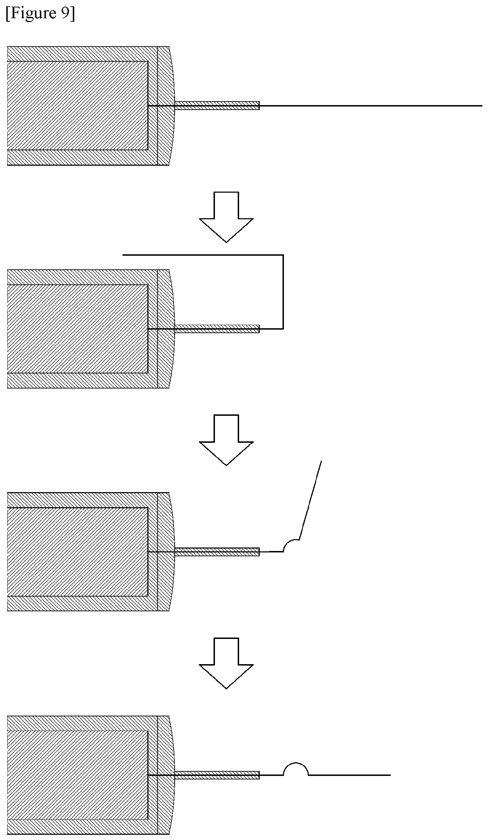

FIGS. 8 and 9 are schematic diagrams illustrating manufacturing processes of battery cells according to embodiments of the present invention, respectively. Referring to FIGS. 8 and 9, the margin 122 may be formed by pressing and plastically deforming the electrode lead 12 with a die having a shape corresponding to the margin 122. Alternatively, the margin 122 may be formed by bending the electrode lead 12.

The present invention also provides a structure of a battery module accommodating therein a battery cell laminate manufactured by stacking a plurality of battery cells. Hereinafter, a preferred embodiment of the battery module according to the present invention will be described with reference to the accompanying drawings.

FIGS. 2 and 3 are a perspective view and an exploded perspective view illustrating a battery module, respectively. Referring to FIGS. 2 and 3, the battery module 2 may include a battery cell laminate 21, a busbar frame 211 and a housing 22.

The battery cell laminate 21 may be formed by stacking a plurality of battery cells 1 along a thicknesswise direction.

The busbar frame 211 may be located at each of the two lengthwise sides of the battery cell laminate 21.

The battery cell laminate 21 and the busbar frame 211 may be accommodated inside the housing 22.

The housing 22 may include: a U frame 221 with an open top, and open front and rear ends, a top plate 222 covering the open top of the U frame 221; and a pair of end plates 223 covering the open front and rear ends of the U frame 221, respectively. However, the housing 22 may have any shape as long as six sides of the battery cell laminate 21 and the busbar frame 211 are covered.

A busbar 213 may be provided at the busbar frame 211.

The electrode leads 12 may be connected to each other in series or in parallel in by being welded to the busbar 213 provided at the busbar frame 211.

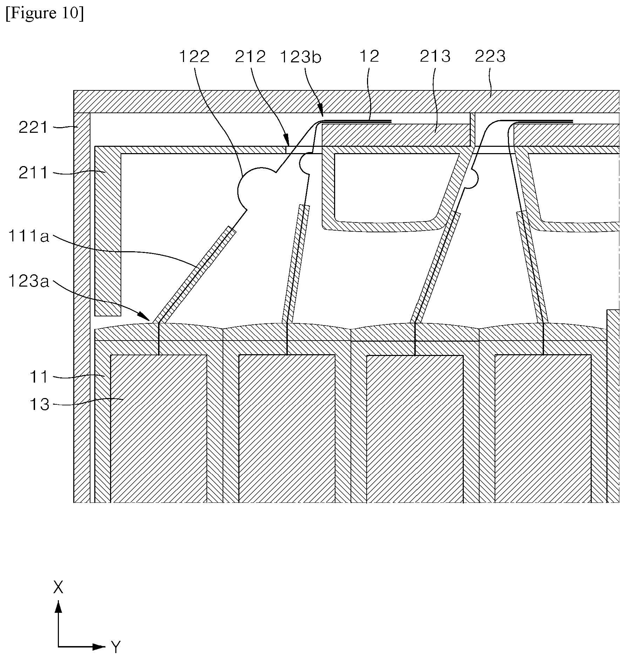

FIG. 10 is an enlarged cross-sectional view illustrating electrode leads welded to busbars in a battery module according to an embodiment of the present invention. Referring to FIG. 10, the busbar frame 211 may be provided with a slit 212 that penetrates the busbar frame 211 in the lengthwise direction.

The busbar 213 may be provided at one side or at both sides of the slit 212 in the lengthwise direction of the busbar frame 211. Here, the lateral end of the busbar 213 may protrude, be same as or be recessed to form a step with respect to the lateral end of the slit 212.

The electrode lead 12 may protrude from the pouch 11 through the first sealing part 111a by extending from the electrode assembly 13, and pass through the slit 212, and be welded to the busbar 213.

The electrode lead 12 may be bent at the first bent part 123a and the second bent part 123b such that the end thereof is close to the busbar 213.

A plurality of bent parts 123 may be provided. For example, the bent part 123 may include: the first bent part 123a provided at a portion where the first sealing part 111a starts or at a portion where the first sealing part 111a ends; and the second bent part 123b adjacent to the slit 212 or the busbar 213.

**In** the process of bending the electrode lead 12 at each of the bent parts 123a and 123b, a spring back phenomenon may occur in which the electrode lead 12 is not completely plastically deformed and is elastically restored to a certain degree. The degree of bending of the electrode lead 12 in each of the bent parts 123a and 123b is a very important factor in the spring back phenomenon. This is because the greater the degree to which the electrode lead 12 is bent in each of the bent parts 123a and 123b, the greater the rate of plastic deformation, thereby reducing the spring back phenomenon. The spring back phenomenon greatly affects the welding strength between the electrode lead 12 and the busbar 213 and the strength of the electrode lead 12 itself.

When the predetermined sections at two sides of the margin 122 are on the same virtual plane 122P, the degree of bending of the electrode lead 12 in the bent part 123 is the same as planar electrode lead 12 without the margin 122. That is, an angle the same as the electrode lead 12 without the margin 122 before and after the margin 122 may be formed such that that the degree of the spring back phenomenon may also be the same as that of the electrode lead 12 without the margin 122.

The advantage of such scheme is that the present invention may be implemented without a decrease in strength caused by the spring back phenomenon by simply including the battery cells with the margin in the battery module while maintaining the conventional manufacturing process and the conventional manufacturing equipment of the battery module that includes only battery cells without the margin.

The predetermined sections may be selected in various ways depending on physical properties such as the bending radius of the bent part 123 or the thickness of the electrode lead 12. For example, since the bending radius of the bent part 123 gets greater as the elasticity of the electrode lead 12 gets stronger, the predetermined sections must be sufficiently long in order for the deformation of the bent part 123 not to affect the margin 122. In case of a typical electrode lead, the predetermined section of 1 mm or longer provides the same result as the electrode lead without the margin 122.

Meanwhile, swelling, a phenomenon in which gas generated inside the pouch 11 inflates the pouch 11, may occur in the battery cell 1.

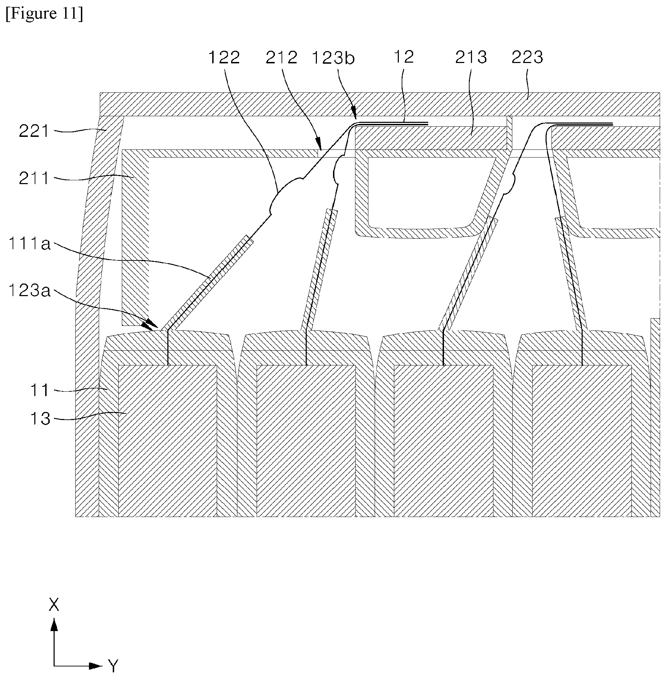

FIG. 11 is an enlarged cross-sectional view illustrating swelling in a battery module according to an embodiment of the present invention. Referring to FIG. 11, when swelling occurs in the battery cells 1, the thickness of the battery cell laminate 21 increases such that the sidewall of the U frame 221 may be deformed. Here, the battery cells 1 expand and push each other in the thicknesswise direction, and accordingly, displacement may occur in the battery cells 1 and the first bent part 123a. Such displacement may be greater for the battery cell 1 located at the outer side in the thicknesswise direction of the battery cell laminate 21. A tension load is applied to the electrode lead 12 according to the displacement, and the degree of bending of the first bent part 123a may increase, thereby increasing the risk of damage to or disconnection of the welding area between the electrode lead 12 and the busbar 213 or the first bent part 123a.

When the electrode lead 12 having the margin 122 according to the present invention is subjected to a tension load due the displacement caused by swelling, the margin 122 is approximately deformed to a straight line such that the overall length thereof is extended. As a result, the load applied to the first bent part 123a and the welding area between the electrode lead 12 and the busbar 213 is reduced, thereby preventing damage or disconnection.

As described above, since the displacement caused by swelling may be greater for the battery cell 1 located at the outer side in the thicknesswise direction of the battery cell laminate 21, the battery cell laminate 21 may include a section with longer electrode lead 12 with the margin 122 for the battery cell 1 of the battery cell laminate 21 located at further outside in the thicknesswise direction of the battery cell laminate 21. For example, the lengths of the electrode leads 12 with the margins 122 of three outermost battery cells 1 of the battery cell laminate 21 may gradually increase toward the outer side in the thicknesswise direction. Accordingly, the greater the displacement of the battery cell 1 due to the stronger the tension load applied to the electrode lead 12, the greater the extension limit of the electrode lead 12, thereby more effectively preventing the risk of damage to or disconnection of the electrode lead 12.

Referring back to FIG. 7, the longer length of the electrode lead 12 including the margin 122 having a semicircular cross-section with a constant radius of curvature R indicates that the radius of curvature R is greater.

Alternatively, the number of the margins 122 provided at the electrode lead 12 may be greater for the battery cell 1 of the battery cell laminate 21 located at further outside in the thicknesswise direction of the battery cell laminate 21. Accordingly, the greater the displacement of the battery cell 1 due to the stronger the tension load applied to the electrode lead 12, the greater the number of elongation of the electrode lead 12, thereby more effectively preventing the risk of damage to or disconnection of the electrode lead 12.

Since the difference in displacement between each battery cell 1 due to swelling does not distinguish between left and right sides, the battery cell laminate 21 may be manufactured to be symmetric about the center of two thicknesswise sides thereof. That is, the battery cell laminate may be manufactured to be symmetric about a plane passing through the center thereof with the thicknesswise direction as the normal direction. Alternatively, the battery cell laminate 21 may be manufactured to be symmetric about the center of two thicknesswise sides thereof at least with respect to the margin 122.

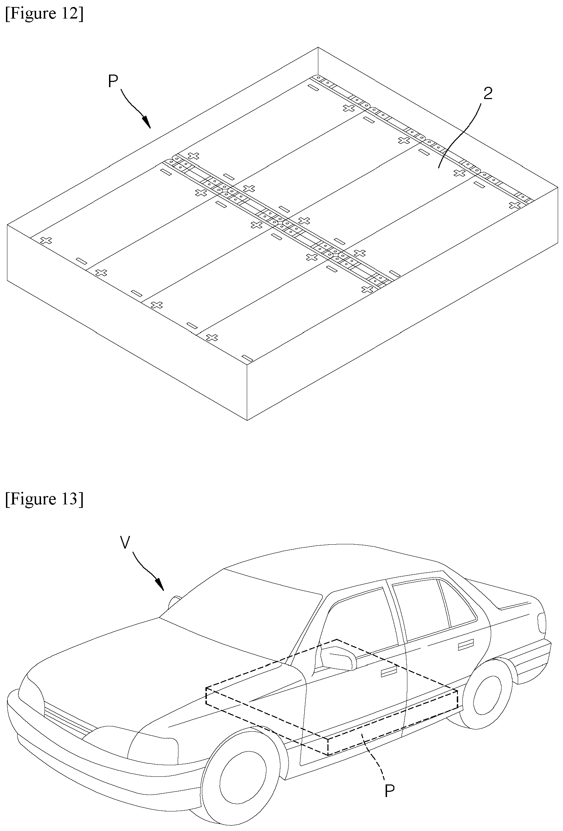

FIGS. 12 and 13 are perspective views showing a battery pack including battery modules according to the present invention and a vehicle including the same, respectively. Referring to FIGS. 12 and 13, the present invention may provide a battery pack P including the battery module 2, and a vehicle V including the battery pack P. Since the structures of the battery pack P and vehicle V are already known, additional descriptions are omitted herein.

The above-described embodiments should be understood in all respects as illustrative and not restrictive, and the scope of the present invention will be represented by the claims to be described later rather than the detailed description given above. In addition, all changes and modifications derived from the equivalent concept as well as the meaning and scope of the patent claims to be described later should be construed as being included in the scope of the present invention.

As described above, the present invention has been described with reference to the illustrative drawings, but the present invention is not limited to the embodiments and drawings disclosed herein, and various modifications may be made by those skilled in the art within the scope of the technical idea of the present invention. It is obvious that transformation may occur. In addition, although the operational effects according to the configuration of the present invention were not explicitly described and explained while explaining the embodiments of the present invention above, it is natural that the predictable effects due to the configuration should also be recognized.

## Claims

1. A battery module comprising:
a battery cell laminate having a plurality of pouch type battery cells stacked therein, each of the plurality of pouch type battery cells comprising electrode leads protruding from lengthwise ends thereof, respectively; and
a busbar frame provided at an lengthwise end portion of the battery cell laminate and comprising a busbar having the electrode lead connected thereto, wherein
at least one of the plurality of pouch type battery cells comprises: a margin capable of extending the electrode leads by being deformed as end portions of the electrode leads are tensioned, and
predetermined sections at two sides of the margin are disposed on substantially same virtual plane.

2. The battery module of claim 1, wherein
the electrode lead comprises at least one of:
a first bent part bent at an other side of the busbar with respect to the margin; and
a second bent part bent at one side of the busbar with respect to the margin.

3. The battery module of claim 1, wherein each of the predetermined section comprises a section of 1mm or more at each side of the margin.

4. The battery module of claim 1, wherein the margin is of an arch shape having an arc-shaped longitudinal cross-section with a constant radius of curvature.

5. The battery module of claim 4, wherein the margin is of an arch shape having an arc-shaped longitudinal cross-section with a radius of curvature.

6. The battery module of claim 1, wherein the margin is manufactured by plastically deforming each of the electrode leads by a die having a shape corresponding to the margin.

7. The battery module of claim 1, wherein the margin is manufactured by bending the electrode lead.

8. The battery module of claim 1, wherein the battery cell laminate comprises a section where an extension limit of the margin increases toward outer side of the battery cell laminate in a thicknesswise direction of the battery cell laminate.

9. The battery module of claim 8, wherein the margin is of an arch shape having an arc-shaped longitudinal cross-section with a radius of curvature, and
the battery cell laminate comprises a section where the radius of curvature of the margin provided at the electrode lead increases toward the outer side of the battery cell laminate in the thicknesswise direction of the battery cell laminate.

10. The battery module of claim 8, wherein the battery cell laminate comprises a section where number of the margin provided at the electrode lead increases toward the outer side of the battery cell laminate in a thicknesswise direction of the battery cell laminate.

11. The battery module of claim 8, wherein two thicknesswise sides of a center of the battery cell laminate are symmetric.

12. A battery pack including a battery module of any one of claims 1 to 11.

13. A vehicle including a battery pack of claim 12.
